# EUROPÄISCHE PATENTANMELDUNG

(11) **EP 1 395 047 A2**
(43) Veröffentlichungstag der Anmeldung: **03.03.2004**
(21) Anmeldenummer: 03016931.2
(22) Anmeldetag: 25.07.2003
(51) Int. Cl.: H04N 5/45

(54) **Fernsehempfangsgerät mit einer steuerbaren Schaltungsanordnung zur Wiedergabe einer Bild-im-Bild-Darstellung**

(30) Priorität: 22.08.2002 DE 10238452
(71) Anmelder: LOEWE OPTA GmbH, 96317 Kronach (DE)
(72) Erfinder: Müller, Heinrich, Ing. grad., 96352 Wilhelmsthal (DE)

(57) **Zusammenfassung**

Die Erfindung betrifft ein Fernsehempfangsgerät mit einer steuerbaren Schaltungsanordnung zur Wiedergabe einer Bild-im-Bild-Darstellung, bei der in einem oder neben einem Hauptbild auf dem Bildschirm durch Auslösen eines Steuerbefehls mittels eines Bedienelementes an einer Ortsbedienung des Gerätes oder an einem Fernbedienungsgeber ein kleines Nebenbild zusätzlich anzeigbar ist. Es ist ferner eine Steuerschaltung vorgesehen, die mit dem Betätigen des ersten Bedienelementes und dem Erscheinen des Nebenbildes auf dem Bildschirm während einer definierten Zeitdauer auf die Eingabe mindestens eines Steuerbefehls zur Generierung einer Timerfunktion wartet und mit Ablauf der Zeitdauer auf manuellen Bildwechselbetrieb von Neben- zu Hauptbild und durch erneutes Betätigen des ersten Bedienelementes oder des anderen Bedienelementes vom Nebenbild zum Hauptbild wechselt, während bei wiederholter Betätigung des ersten Bedienelementes während der bestimmten Zeitdauer eine Timerfunktion aktiviert wird, die die steuerbare Schaltungsanordnung zum automatischen Umschalten des Nebenbildes zum Erscheinen als Hauptbild mit Ablauf einer bestimmten Zeitvorgabe veranlasst.

## Beschreibung

Die Erfindung betrifft ein Fernsehempfangsgerät mit einer steuerbaren Schaltungsanordnung zur Wiedergabe einer Bild-im-Bild-Darstellung mit den im Oberbegriff des Anspruchs 1 angegebenen Merkmalen.

Eine Schaltungsanordnung der gattungsgemäßen Art ist aus der DE 101 15 709 C1 bekannt. Mit dieser bekannten Schaltungsanordnung ist bei einem Fernsehgerät eine vereinfachte Bedienung ermöglich, die insbesondere geeignet ist, bei Empfang von lästigen Werbebeiträgen einfach und schnell auf einen anderen Empfangskanal oder eine andere Signalquelle umzuschalten, die dennoch die Beobachtung des Werbebeitrags und den Einsatz der Fortsetzung des gesehenen Programmbeitrages ermöglicht. Mit der bekannten Schaltung ist es ferner durch eine einfache Steuerung möglich, eine Überwachungsfunktion für ein weiteres Bild zu realisieren, zum Beispiel die Haustürüberwachung mittels Kamera. Gemäß der in der Schrift durchgeführten Realisierung wird beim Bedienen einer einzigen Funktionstaste bzw. eines Bedienelementes für die Funktion Bild-im-Bild-Darstellung automatisch das Hauptbild zum Nebenbild. Es erfolgt also keine vorgezogene Aktivierung, aus der heraus durch Betätigen einer weiteren Taste eine Umschaltung von Haupt- auf Nebenbild möglich ist, sondern eine rasche Wandlung des Hauptbildes zum Nebenbild. Das dann verschwindende Hauptbild kann entweder automatisch durch ein anderes Bild eines anderen empfangenen Fernsehsignals ersetzt werden oder es kann auch beispielsweise das Videosignal von einer Kamera angeschaltet und im Hauptbild wiedergegeben werden. Diese Umschaltfunktionen sind zeitlich nachfolgend möglich und entsprechen den bekannten Umschaltmöglichkeiten. Es ist auch möglich, mittels +/- Tasten die Hauptbilder durch solche anderer Kanäle wahlweise zu ersetzen. Das erste Nebenbild ist dann das Bild des bevorzugten Programms, das jederzeit durch nochmalige Betätigung der gleichen Funktionstaste oder einer anderen hierfür vorgesehenen zusätzlichen Funktionstaste wieder zurückgeführt und zum Hauptbild wird. Es ist ersichtlich, dass darüber beispielsweise im Falle eines Werbesendeabschnittes ein außerordentlich schnelles Umschalten ermöglicht wird und dass der Werbebeitrag als verkleinertes Bild sichtbar bleibt bzw. im Hintergrund die Information als bevorzugtes Programm erhalten bleibt, so dass bei dem Betrachten des anderen Bildes, das nun an die Stelle des weggeblendeten Hauptbildes tritt, bei Beendigung des Werbeeintrages sofort wieder auf das Bild des ursprünglichen Kanals oder der Signalquelle umgeschaltet werden kann.

Aus der DE 689 17 850 T2 ist eine Vorrichtung zum Gebrauch in einem Fernsehempfänger bekannt, die Dateneingabemittel zur Erzeugung von Daten aufgrund einer Betätigung durch den Benutzer, Videosignalauswahlmittel und Abstimmmittel umfasst, die auf ein Steuerungssignal für die Videosignalauswahl ansprechen, um einen Fernsehkanal aus einer Vielzahl von RF-Signalen auswählen zu können, die jeweils empfangbaren Fernsehkanälen entsprechen. Ferner ist ein Steuermittel vorgesehen, das mit den Dateneingabemitteln und Auswahlmitteln verbunden ist, um das Steuerungssignal für die Videosignalauswahl in Abhängigkeit von den Daten zur Steuerung der Auswahl eines bestimmten Signals aus der Vielzahl von Signalen zu erzeugen. Die Steuerungsmittel weisen einen Eingang zum Empfang eines Zeitschalterstartsignals und Zeitschaltermittel auf, die auf das Zeitschalterstartsignal reagieren, um eine vorher festgelegte Zeit zu stoppen. Dieses Steuerungsmittel ist mit einem Speichermittel verbunden, das durch das Zeitschalterstartsignal Daten über das Steuerungssignal für die Videosignalauswahl speichert. Das Steuerungsmittel veranlasst das Speichermittel dazu, Videosignalauswahldaten über das z.Z. ausgewählte Videosignal zu speichern, und die Zeitschaltermittel dazu, das Stoppen der vorher festgelegten Zeit zu beginnen. Nach Ablauf der vorher festgelegten Zeit veranlasst das Steuerungsmittel die Videosignalauswahlmittel, das gewählte Videosignal in Übereinstimmung mit den gespeicherten Videosignalauswahldaten wieder auszuwählen, wenn die Videosignalauswahlmittel zuvor gesteuert worden sind, und zwar nach Auftreten des Zeitschalterstartsignals und während der vorher festgelegten Zeit. Als Steuerungsmittel ist dabei ein Mikrocomputer vorgesehen und als Auswahlmittel mehrere Tasten, die für die Programmierung zu betätigen sind. Der eingestellte Zeitschalterkreis bewirkt nach Ablauf einer vorher festgelegten Zeit, das Abstimmsystem unter Verwendung der gespeicherten Kanaldaten wieder auf den ursprünglichen Kanal zurückzustellen. In einer Ausführungsform ist dabei vorgesehen, dass über eine Bildim-Bild-Einrichtung die Bilder eines ersten Programms, die als Hauptbild dargestellt werden, in einen Nebenbildbereich auf dem Bildschirm verschoben werden, wenn eine Umschaltung durch Betätigung einer Timertaste und eine automatische Rücksetzung durch die eingestellte Zeitfunktion erfolgen. Durch Betätigen einer weiteren Taste kann innerhalb des Zeitfensters auch manuell eine Rückschaltung erfolgen. Durch diese Maßnahme ist es möglich, durch Voreinstellung eines Zeitabschnittes Werbeblöcke aus einer laufenden Sendung zu eliminieren, deren Startbeginn durch Eingabe der Timerfunktion dem Gerät vom Benutzer mitgeteilt wird. Das Hauptbild gibt in der Zwischenzeit Bilder eines anderen voreingestellten Kanals wieder.

Der Erfindung liegt die Aufgabe zu Grunde, eine verbesserte Umschaltfunktion zu realisieren, die dem Benutzer eine verzögerte Entscheidung zwischen PIP-Umschaltung und automatischer zeitabhängiger Umschaltung ermöglicht, um den ursprünglich gewünschten Sendebeitrag wieder zur Anzeige bringen zu können.

Die Erfindung löst die Aufgabe durch Anwendung der im Anspruch 1 angegebenen technischen Lehre, wonach eine Steuerschaltung vorgesehen ist, die mit dem Betätigen des ersten Bedienelementes und dem Erscheinen des Nebenbildes auf dem Bildschirm während einer definierten Zeitdauer auf die Eingabe mindestens eines Steuerbefehls zur Generierung einer Timerfunktion wartet und mit Ablauf der Zeitdauer auf manuellen Bildwechselbetrieb vom Neben- zum Hauptbild und durch erneutes Betätigen des ersten Bedienelementes oder des anderen Bedienelementes vom Nebenbild zum Hauptbild wechselt, während bei wiederholter Betätigung des ersten Bedienelementes während der bestimmten Zeitdauer eine Timerfunktion aktiviert wird, die die steuerbare Schaltungsanordnung zum automatischen Umschalten des Nebenbildes zum Erscheinen als Hauptbild mit Ablauf einer bestimmten Zeitvorgabe veranlasst.

Dem Benutzer des Gerätes wird die direkte Umschaltung im PIP-Betrieb ermöglicht, so wie dies in der DE 101 15 709 C1 angegeben ist. Ferner kann mit derselben Taste wieder zurückgeschaltet werden oder es wird eine Timerfunktion generiert, wobei durch Zuwarten über eine bestimmte Zeitdauer der manuelle PIP-Betrieb automatisch erfolgt. Wird hingegen während dieser bestimmten Zeitdauer die Taste ein weiteres Mal betätigt, so wird auf Timerfunktion umgestellt, so dass der Benutzer nun die Möglichkeit hat, zwischen verschiedenen Zeitvorgaben, die die Umschaltzeitpunkte bestimmen, auswählen oder aber auch eine manuelle Zeitfenstervorgabe vornehmen zu können, die nicht in vorgegebenen Schritten bereits als Auswahlblöcke auf dem Bildschirm dargestellt werden. Zweckmäßig ist es dabei, ein Auswahlmenü mit dem Umschalten des Hauptbildes auf das Nebenbild beim erstmaligen Betätigen eines ersten Bedienelementes zu generieren, das in einem Block eine intelligente PIP-Umschaltung angibt und in anderen Blöcken Zeitangaben enthält, die fest vorprogrammiert sind, wie beispielsweise 30, 60, 90, 120, 150, 240 und 300 s usw., und einen weiteren Block, der eine manuelle Einstellung der Zeitdauer ermöglicht, nach der eine automatische PIP-Rückstellung erfolgen soll. Dieser manuelle Block kann bewirken, dass +/-Tasten, die normalerweise für Programmumschaltungen oder Lautstärkeregelung vorgesehen sind, auf den Timer aufschalten, um hierüber eine Sekundeneinstellung auf einfache Weise zu ermöglichen. Auch diese Funktion sollte nur während einer bestimmten Zeitdauer aktiviert sein. Wird während dieser bestimmten Zeitdauer, die beispielsweise 5 s betragen kann, keine Zeiteinstellung vorgenommen, so schaltet das System automatisch wieder auf den manuellen PIP-Umschaltbetrieb zurück. Es kann auch vorgesehen sein, dass nach dieser Zeit während einer weiteren Zeit die +/-Tasten dazu verwendet werden können, um den Cursor von einem Block zum anderen zu führen, um dann durch Betätigung der einzigen Taste diesen Zeitblockbereich auszuwählen.

Selbst die manuelle Zeiteinstellung kann aber auch mittels der einzigen Taste realisiert werden. Dies erfolgt beispielsweise, indem bei der erstmaligen Betätigung eine Umschaltung des Hauptbildes in das Nebenbild erfolgt und im Hauptbild ein voreingestellter Sender erscheint, der beispielsweise der nächste Sender sein kann, der in der Reihenfolge in einer Sendertabelle abgespeichert ist. Wird nun z.B. während einer Zeit von 5 s das Betätigungselement erneut betätigt, so wird die Timerfunktion aktiviert und der Cursor springt automatisch auf den nächsten Auswahlblock, der beispielsweise 30 s oder 60 s angibt. Erfolgt keine weitere Betätigung, so wird nach Ablauf einer bestimmten Zeit, z.B. 4 s, der Timer auf 30 s bzw. 60 s eingestellt und löst nach Ablauf dieser Zeitdauer eine Umschaltung des Nebenbildes in das Hauptbild aus. Wird hingegen innerhalb der 4 s erneut das Bedienelement betätigt, so wird der nächste Auswahlblock durch den Cursor angefahren. Wird er nicht durch erneutes Betätigen innerhalb von 4 s verlassen, so wird dieses Fenster im Timer eingestellt. Auf diese Art und Weise ist es möglich, bis zum letzten Block, dem manuellen Einstellblock, zu gelangen, der dann die +/-Tastenfunktion aktiviert, um eine individuelle Zeitdauereinstellung zu ermöglichen, was aber auch bei direkter Eingabe über eine vorhandene Zehnertastatur anstelle von +/-Tasten erfolgen kann. Wird hingegen innerhalb von 4 s eine entsprechende Zeiteingabe nicht ausgelöst, so kann das System so reagieren, dass dann wieder die manuelle PIP-Umschaltung realisiert ist, d.h. dass durch nochmalige Betätigung das Nebenbild zum Hauptbild wird, oder aber es kann zunächst in einem weiteren Zeitfenster eine Bedienung des Cursors über die +/-Funktionstasten zum Zwecke des Verschiebens des Cursors erfolgen, um rückwärts oder auch vorwärts gerichtet, praktisch im Ring laufend, die einzelnen Blöcke erneut auswählen zu können. Die Ringfunktion kann auch realisiert werden durch Betätigen der einzigen Taste, wenn entsprechende Zeitfenster definiert sind, innerhalb derer Auswahlfunktionen über die Taste ausgelöst werden müssen. Mit Ablauf dieser Zeitfenster kann dann durch Eröffnen eines weiteren kleineren Zeitfensters, z.B. 2 s, die Umschaltfunktion auf den nächsten Block realisiert werden. Werden die 2 s hingegen überschritten, so kann die ausgewählte Blockfunktion realisiert werden bzw. wird diese aus der Auswahlfunktion für den Timer herangezogen.

Vorteilhafte Weiterbildungen der Erfindung sind in den Unteransprüchen im einzelnen selbsterklärend angegeben.

Mit der Erfindung ist zum Beispiel das Anwendungsszenarium "Überbrücken von Werbeblöcken" auf einfache Weise manuell und auch dann automatisch realisierbar, wenn der Benutzer nach dem Umschalten des Hauptbildes in das Nebenbild das Nebenbild nicht mehr bezüglich der wiedergegebenen Beiträge überwacht. Die Kombination lässt sich mit nur einem Bedienelement realisieren.

Bei der Einstellung der Zeiten, die den Timer veranlassen, die Umschaltung nach Zeitablauf auszulösen, orientiert sich dabei der Benutzer an den üblicherweise bei dem betreffenden Sender zeitlichen Darstellungen der Werbeblöcke, die zum Beispiel 60, 120, 240 und 300 s betragen können. Um eine leichtere Einstellung des Timers zu ermöglichen, ist vorgesehen, dass die Timerfunktionsdarstellung bereits Auswahlfelder bzw. Blöcke mit Sekunden- oder Minuten-Einträgen auf dem Bildschirm mittels On-Screen- Schaltung einblendet. Der Benutzer kann dann beispielsweise unter Zuhilfenahme einer integrierten Cursorfunktion durch Steuerung des Cursors mittels Cursor-Funktionssteuermittel auf der Fernbedienung das entsprechende Feld auswählen und mit der Auswahl oder durch Betätigung einer zusätzlichen Taste den Timer veranlassen, die ausgewählte Zeit abzuarbeiten, um nach Ablauf der Zeit das Steuersignal zu generieren, das die steuerbare Schaltungsanordnung zur automatischen Umschaltung des Nebenbildes zum Hauptbild veranlasst. Der Benutzer braucht also manuell nicht mehr einzuwirken, wenn das unerwünschte Szenenende auf dem Nebenbild erscheint. Es wird stets sichergestellt, dass mit Ablauf der Vorgabezeit die Umschaltung erfolgt. Liegt das unerwünschte Szenenende bereits vor Ablauf des eingestellten Zeitfensters und stellt dies der Benutzer durch Betrachtung fest, so kann er durch direkte Auslösung den Bildinhalt des Nebenbildes wieder zum Hauptbild machen.

Bei Betätigung der Funktionstaste bzw. des Bedienelementes Bild-im-Bild-Darstellung wird automatisch durch die Schaltungsanordnung das durch den Werbeblock unterbrochene aktuelle Programm in das Kleinbild, nämlich das Nebenbild, verschoben. Im Hauptbild erscheinen dann Bilder z.B. des vorher gewählten Programms. Darüber hinaus ist das Hauptbild über die Programmwahltasten in an sich bekannter Weise austauschbar, so dass jedes Programm wahlweise eingestellt werden kann. Gleichzeitig ist es aber auch möglich, das Ende des Werbeblockes durch Beobachten des Nebenbildes festzustellen. Zusätzlich kann auch die Programminformation aus dem Videotext oder dem EPG angezeigt werden. Wird nun das Ende des Werbeblockes visuell vom Benutzer festgestellt oder auch angezeigt, so wird durch nochmalige Betätigung der Funktionstaste "Bild-im-Bild" das unterbrochene Programm in das Hauptbild zurückgeholt und das Nebenbild erlischt oder aber die Bild-im-Bild-Funktion bleibt erhalten, so dass in dem Nebenbild andere Bilder von anderen Programmquellen angezeigt werden. Dies können beispielsweise Bilder von einer Kamera an einer Haustür sein, die zur Überwachung dann automatisch eingeschaltet wird. Bei erneutem Betätigen der Funktionstaste Bild-im-Bild-Darstellung wird dieses Bild wieder weggeschoben und automatisch das Hauptbild zum Nebenbild. Im Falle, dass der Benutzer das Nebenbild nicht mehr verfolgt, erfolgt eine automatische Rückschaltung des Nebenbildes durch die vorgesehene Timerfunktion. Diese Timerfunktionen sind auch bei allen nachfolgend beschriebenen Anwendungsszenarien ergänzend realisierbar.

Im Falle, dass die Bild-im-Bild-Funktion beim Rückholen des Programms aus dem Nebenbild in das Hauptbild weiterhin erhalten bleibt, kann auch bei Auslegung der Funktionstaste als Mehrfunktionstaste durch einen weiteren Tastendruck die Abschaltung der Bild-im-Bild-Funktion erreicht werden. Dies ist aber auch durch Betätigen einer anderen entsprechend belegten Funktionstaste möglich.

Zum Überwachen einer Videoaufnahme kann das gleiche System aber auch herangezogen werden. Bei Betätigen der Funktionstaste Bild-im-Bild-Darstellung wird von der Schaltungsanordnung das dargestellte AV-Bild vom Bildaufnahmegerät in das Kleinbild, nämlich das Nebenbild, geschoben. Über die Programmwahltasten ist dann das Hauptbild bedienbar. Die Aufnahme des VTR-Gerätes ist also parallel visuell überwachbar. Wird festgestellt, dass beispielsweise ein Werbeeintrag gerade empfangen wird, der nicht mit aufgezeichnet werden soll, so ist eine unmittelbare Bedienung am Videogerät möglich oder aber auch bei ferngesteuerter Ausführung über das Fernsehempfangsgerät mittels Bussystem, um einen Stillstand des Aufzeichnungsgerätes zu bewirken. Erst wenn erkannt wird, dass das normale Programm fortgesetzt wird und der Werbeblock ausgelaufen ist, ist es sodann möglich, die Stopp-Funktion aufzuheben und die Aufnahme fortzusetzen. Eine vereinfachte Bedienung des VTR-Gerätes kann dabei auch durch eine zusätzliche Onscreen-Anzeige, beispielsweise im Nebenbild oder in einem zweiten Nebenbild, mit entsprechender Pausen-Funktionstastenanzeige realisiert werden.

Ein Fernsehgerät nach der Erfindung gestattet darüber hinaus eine Startüberwachung eines ausgewählten Programms. Zu diesem Zweck wird beispielsweise der Kanal angewählt, der im Hauptbild gezeigt werden soll. Wird der Programmbeitrag noch nicht gesendet und der Benutzer will ein anderes Programm sehen, so betätigt er wiederum die Funktionstaste Bild-im-Bild-Darstellung, wodurch das augenblicklich gesehene Hauptbild in das Nebenbild geschoben wird und die Auswahl anderer Hauptbilder aus anderen Programmen möglich ist. Er überwacht visuell den Beginn des Programms und kann sodann wieder durch Betätigen der Funktionstaste oder einer anderen Funktionstaste das im Nebenbild erscheinende Wunschprogramm zum Hauptbild werden lassen.

Besitzt darüber hinaus das Fernsehgerät beispielsweise auch Telefonfunktion und kann aus einem Telefonregister heraus eine Anwahl erfolgen oder aber auch in Kombination mit dem Internet eine bestimmte Rechneradresse angewählt werden, so ist es auch möglich, im Hauptbild die Adressen bzw. die Telefonnummern und Namen des Telefonregisters zunächst darzustellen. Erfolgt nun eine Auswahl und soll später auch ein Telefongespräch geführt werden, so kann durch einfache Bedienung der Funktionstaste Bild-im-Bild-Darstellung das Hauptbild in das Nebenbild geschoben werden und so während des Telefonierens das Hauptbild betrachtet werden. Nach Beendigung des Telefonats ist sodann wieder eine Rückführung des Nebenbildes zum Hauptbild möglich, um einen anderen Gesprächspartner bzw. eine andere über das Telefonnetz erreichbare Signalquelle, z.B. eine Internetverbindung, aufrufen zu können.

Weiterhin sind unter Verwendung des gleichen Prinzips durch einfache Umschaltung auch eine Hausüberwachung sowie eine Baby-Überwachung möglich, wobei durch einfaches Bedienen mittels einer einzigen Funktionstaste für die Bild-im-Bild-Darstellung das gegenwärtige Hauptbild in das Nebenbild sofort übergeführt wird, beispielsweise eine Baby-Überwachung mittels Kamera in einem Nebenraum, und trotz des Sehens eines Fernsehbeitrages irgendeines Kanals im Hauptbild die Baby-Überwachung fortlaufend durchgeführt werden kann, bis die Funktion Bild-im-Bild-Darstellung ausgeschaltet wird.

Die Funktion ist aber auch verwendbar für den Fall, dass über das Fernsehgerät externe Geräte gesteuert werden sollen. Auch hier ist es beispielsweise möglich, die Benutzerführung bzw. die Onscreen-Darstellung des zu steuernden externen Gerätes abzufragen und als Signalquelle direkt für die Hauptbilddarstellung durchzuschalten. Erfolgt eine Steuerung, beispielsweise eines angeschlossenen Videorecorders oder eines angeschalteten Haushaltsgerätes, so kann durch Betätigen der Funktionstaste Bild-im-Bild-Darstellung das Hauptbild in das Nebenbild geschoben werden, um nachträgliche Steuerfunktionen durchzuführen oder Rückmeldungen aus der Steuerfunktion angezeigt zu erhalten bei gleichzeitigem Betrachten von Bildern anderer Signalquellen, die dann als Hauptbild dargestellt werden. Sobald eine Rückführung wieder in das Hauptbild erfolgt, ist eine weitere Steuerung möglich. Hier empfiehlt es sich, mit der Funktionsumschaltung zugleich auch eine Steuerfunktionsblockierung vorzusehen, so dass das angeschlossene externe Gerät nur dann über den Fernsehempfänger bedienbar ist, wenn das Nebenbild wieder zum Hauptbild geworden ist.

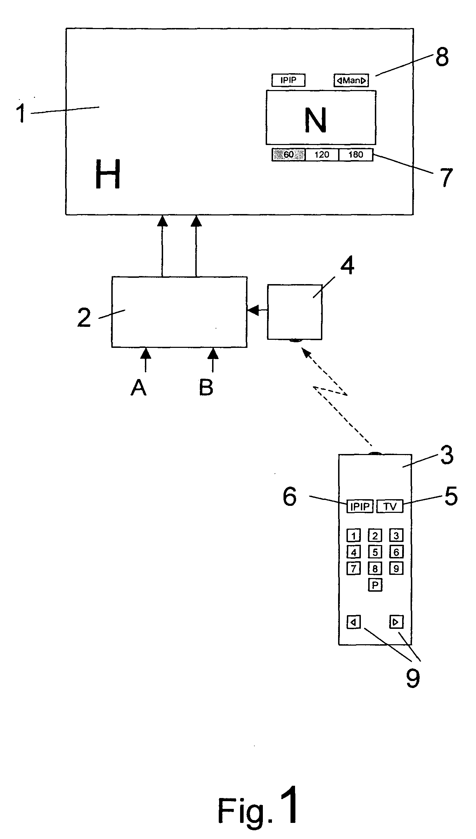

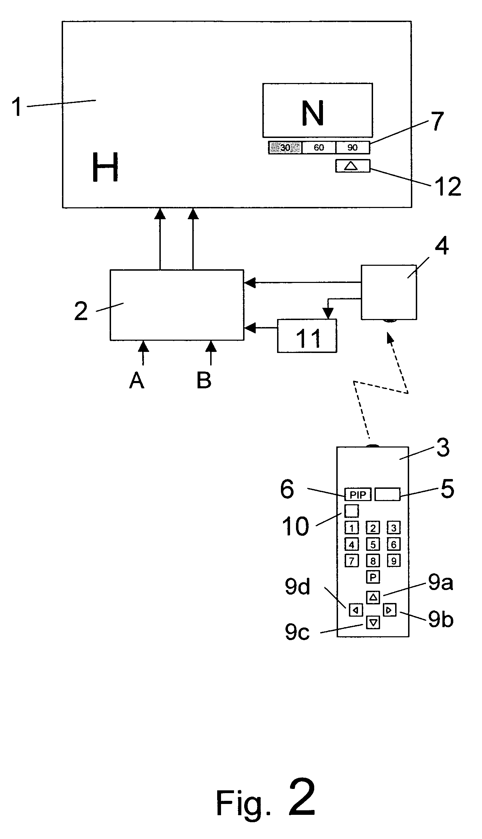

Die Erfindung wird nachfolgend anhand der in den Figuren 1 und 2 dargestellten Ausführungsbeispiele ergänzend erläutert.

In Fig. 1 ist in Form einer schematischen Blockdarstellung eine Ausführungsform eines Fernsehempfangsgerätes nach der Erfindung dargestellt. Auf einem Bildschirm 1 ist eine Hauptbild- und Nebenbildanzeige möglich. Die Bild-im-Bild-Darstellungsfunktion wird realisiert durch eine steuerbare Schaltungsanordnung 2. Diese weist einen Vollbildspeicher auf, der auch als Bild-im-Bild-Speicher verwendet werden kann, sowie einen Prozessor, der die Bild-im-Bild-Überlagerung steuert bzw. die Videosignale von den beiden Eingängen A und B miteinander mischt, um das Nebenbild im Hauptbild darstellen zu können. Diese Techniken sind bekannt. Die Steuerung der PIP-Funktion erfolgt über den Fernbedienungsempfänger 4, der seine Signale von einem Fernbedienungsgeber 3 empfängt. Auf dem Fernbedienungsgeber ist ein erstes Bedienungselement 6 in Form einer Funktionstaste enthalten, die mit IPIP bezeichnet ist, was eine intelligente Bild-im-Bild-Darstellung bedeutet. Die Fernbedienung weist ferner mindestens ein zweites Bedienelement 5 auf, ferner eine Zehnertastatur und +/-Tasten im unteren Feld. Die Schaltungsanordnung 2 beinhaltet ferner eine Timeranschaltung, die aber auch im Fernbedienungsempfänger enthalten sein kann. Über diese wird die Bildfunktion zusätzlich gesteuert. Betrachtet der Zuschauer eine Fernsehsendung und wird beispielsweise in dieser Fernsehsendung ein Werbebeitrag eingefügt, so ist es gemäß der Erfindung möglich, durch Betätigung des Bedienelementes 6 die Bild-im-Bild-Funktion auszulösen. Das Hauptbild wird zum Nebenbild, und im Hauptbild wird eine andere Sendung wiedergegeben. Dies kann z.B. eine Sendung sein, die über den nächstfolgenden Kanal empfangen wird, es kann aber auch ein durch die +/-Tasten auf dem Bedienungsgeber 3 ausgewählter Kanal zur Anzeige gebracht werden. Mit dem Umschalten werden zugleich die Blöcke der Timerfunktion 7 zur Anzeige gebracht sowie die über dem Nebenbild (N) dargestellten Funktionen IPIP und Man 8, über die eine manuelle Einstellung von Zeitfunktionen möglich ist, wie später noch näher beschrieben wird. Es kann aber auch anstelle dieser Darstellung zunächst nur die IPIP-Funktion ausgelöst und/oder dargestellt werden. Diese erinnert den Benutzer daran, intuitiv eine ergänzende Funktion auszulösen. Bedient er innerhalb eines Zeitfensters nach der Erfindung die IPIP-Taste ein zweites Mal, so erscheinen erst dann die Timer-Funktionsanzeige 7 und der Einstellbock 8 für die manuelle Einstellung. Nun kann der Benutzer aus der Timerfunktion, die im Ausführungsbeispiel drei feste Zeitfenstervorgaben enthält, mittels eines Cursors auswählen, beispielsweise den Block 60 s, der durch die Hervorhebung markiert ist. Diese Auswahl kann er ebenfalls über die Bedientaste 6 vornehmen, wodurch der Timer gesetzt ist und automatisch nach 60 s eine Rückschaltung des Nebenbildes in das Hauptbild bewirkt und das Nebenbild ausblendet. In diesem Betriebszustand "60 s" bzw. einem anderen ausgewählten Zeitfenster (120 s, 180 s) ist es auch möglich, den automatischen PIP-Betrieb zu unterbrechen. Auch dies ist, nachdem die Auswahl des Zeitfensters erfolgt ist, durch erneutes Betätigen der Bedientaste 6 möglich. In diesem Fall wird ebenfalls der Timer zurückgestellt und die PIP-Funktion bewirkt eine Umschaltung zwischen Neben- und Hauptbild. Das Nebenbild wird dann zum Hauptbild und die PIP-Funktion abgeschaltet. Diese Funktion kann aber auch durch Betätigen der zweiten Bedientaste 5 erfolgen. Wird hingegen bei der Cursorauswahl, beispielsweise über die Taste 6, innerhalb eines kleinen Zeitfensters (z.B. 3 s) nach Auswahl des ersten Zeitfensters 60 s, nochmals die Taste betätigt, so schaltet automatisch die Timerfunktion auf 120 s um und innerhalb eines dortigen kleinen Zeitfensters auf 180 s. Nach Ablauf dieses Zeitfenster, das beispielsweise nur 3 s beträgt, wird die Timerfunktion jeweils als fest eingestellte Timerfunktion ausgewertet und steuert die PIP-Schaltung 2. Innerhalb des dann größeren Zeitfensters kann die beschriebene Funktion jederzeit rückgängig gemacht werden, und zwar durch Betätigung ein und derselben Taste 6. Es ist auch möglich, durch weiteren Tastendruck innerhalb des kleinen Zeitfensters oder durch Betätigen der Fortschalttaste 9 auf das manuelle Einstellfenster 8 umzuschalten. Durch Betätigen der dort markierten Richtungstasten, die seitlich von "Man" eingezeichnet sind, ist dann eine individuelle Zeiteingabe möglich, die beispielsweise in einem nicht dargestellten weiteren Fenster auf dem Hauptbild dargestellt wird, z.B. die Einstellung von 240 s. Bei entsprechender zugeordneter Programmierung ist die Einstellung auch über die Tasten 9 möglich. Die Umschaltung würde also dann erst wieder nach 240 s erfolgen. Die Umschaltung vom Nebenbild zum Hauptbild kann in jedem eingestellten Zustand in der beschriebenen Art und Weise erfolgen. Wird nach dem erstmaligen Betätigen der Taste 6 die Funktion IPIP ausgelöst und bis zum Ablauf eines definierten kleinen Zeitfensters diese Taste nicht ein zweites Mal benutzt, so erfolgt eine automatische Umschaltung auf PIP-Betrieb, so dass bei erneuter Betätigung der Taste 6 eine Umschaltung des Nebenbildes zum Hauptbild bewirkt wird. Es ist also möglich, mittels einer einzigen Taste hier diverse Steuerfunktionen auszulösen, und zwar wird dies durch Zeitfensterauswertung nach Auslösung der ersten Bild-im-Bild-Funktion und Weiterschaltfunktionen möglich.

Das Ausführungsbeispiel in Fig. 2 zeigt einen Bildschirm 1, in welchem ein Hauptbild H und ein Nebenbild N anzeigbar sind. Die Bild-im-Bild-Darstellungsfunktion wird realisiert durch die steuerbare Schaltungsanordnung 2. Diese steuerbare Schaltungsanordnung weist beispielsweise einen Vollbildspeicher und einen Bild-im-Bild-Speicher auf sowie einen Prozessor, der die Bild-im-Bild-Überlagerung steuert, und eine Auswahlschaltung, um die Videosignalquellen wahlweise anzuschalten. Die Videosignalquellen liegen über die Eingänge A und B an der steuerbaren Schaltungsanordnung an. Der Betrachter sieht im Normalfall ein Hauptbild auf dem Fernsehbildschirm 1. Wird nun aber z.B. ein Werbeeintrag dargestellt und er will diesen nicht sehen, so kann er einen Programmwechsel vornehmen und bedient nach der Erfindung die auf dem Fernbedienungsgeber 3 vorgesehene PIP-Taste 6, die die Funktionstaste für die Bild-im-Bild-Darstellung ist. Mittels Infrarotlicht wird der entsprechende Steuerbefehl an einen Fernbedienungsempfänger 4 übertragen, der die Geräteschaltung, insbesondere die steuerbare Schaltungsanordnung 2, derart umschaltet, dass das Hauptbild, das als Vollbild erscheint, umgewandelt wird in ein Nebenbild N, das wesentlich verkleinert auf dem Bildschirm dargestellt wird, während das Hauptbild beispielsweise durch Bilder des vorher empfangenen Kanals ersetzt wird. Es ist aber auch möglich, mittels einer nicht darstellten Abstimmsteuerschaltung auf jeden beliebigen Empfangskanal oder andere Signalquellen das Hauptbild umzuschalten. Hierzu sind die Tasten 1, 2 bis 0 bzw. nicht dargestellte Tasten P-und P+ auf dem Fernbedienungsgeber vorgesehen. Wird nun durch Beobachtung festgestellt, dass der Werbeblock beendet ist und will der Benutzer das ursprüngliche Programm weitersehen, so wird durch wiederholtes Betätigen der PIP-Taste 6 oder einer zusätzlichen entsprechend ausgelegten Funktionstaste 5 die Nebenbilddarstellung zur Hauptbilddarstellung zurückgeschaltet und entsprechend das Bild der empfangenen Signalquelle umgewandelt, um wieder als Hauptbild in Erscheinung zu treten und den gesamten Bildschirm auszufüllen.

Soll nun die Bild-im-Bild-Funktion gänzlich abgeschaltet werden, so kann dies automatisiert werden, indem mit dem Rückschalten automatisch das Nebenbild nicht mehr erscheint, oder aber auch durch nochmaliges Betätigen der PIP-Taste 6 oder einer anderen Funktionstaste 5.

Zusätzlich ist eine Timerschaltung 11 vorgesehen, die erfindungsgemäß bei Betätigen des Bedienelementes 6 und Erscheinen des Nebenbildes N auf dem Bildschirm 1 aktiviert werden kann. Dies erfolgt über eine nicht dargestellte OSD- Schaltung ( On-Screen-Display-Schaltung), die eine Timerfunktion 7 aktiviert und auf dem Bildschirm anzeigt.

Zweckmäßigerweise kann die Anzeige unterhalb des Nebenbildes oder auch im Nebenbild selbst vorgesehen sein, zum Beispiel als Darstellungszeile mit verschiedenen Blockabschnitten, in denen Zeitdauerangaben wie 60, 120, 240 und 300 s eingetragen sind. Der Fernbedienungsgeber weist Betätigungstasten 9a, 9b, 9c, 9d auf, mit denen ein Cursor 12 auf dem Bildschirm in einen Blockabschnitt verschiebbar ist. Wird sodann die vorgesehene Bestätigungstaste 10 gedrückt, so aktiviert das Programm den Timer 8 durch den mittels Fernbedienungsgebers übertragenen Befehl. Der Timer 8 generiert einen Umschaltimpuls mit Ablauf des ausgewählten Zeitfensters und veranlasst die steuerbare Schaltung 2 automatisch zur Umschaltung des Nebenbildes N auf das Hauptbild H. Das Nebenbild N blendet dann aus. Die Timerfunktionsanzeige kann auch bereits mit der Betätigung der Bestätigungstaste 10 ausgeblendet werden. Völlig unabhängig von dieser automatischen Steuerung kann die vorher beschriebene Steuerung auch mittels des Fernbedienungsgebers 3 manuell vom Benutzer durchgeführt werden. Anstelle von Zeitdauerangaben kann auch ein Menüfenster erscheinen, das zum Eintrag der Zeitdauer über eine Zehnertastatur auf dem Fernbedienungsgeber oder einer Ortsbedienung oder im Falle der Verwendung eines Touchscreens auf dem Bildschirm auffordert. Nach dem Eingeben z.B. von 33 s kann dann der Timer unmittelbar starten oder erst durch Betätigen einer zusätzlichen Bestätigungstaste. Die Erfindung ist auf unterschiedliche Formatsdarstellungen des Bildes sowie auf Geräte mit unterschiedlichen Bildschirmgrößen anwendbar und auch auf keine Displaytechnologie beschränkt.

## Patentansprüche

1. Fernsehempfangsgerät mit einer steuerbaren Schaltungsanordnung zur Wiedergabe einer Bild-im-Bild-Darstellung, bei der in einem oder neben einem Hauptbild (H) auf dem Bildschirm (1) durch Auslösen eines Steuerbefehls mittels eines Bedienelementes an einer Ortsbedienung des Gerätes oder an einem Fernbedienungsgeber (3) ein kleines Nebenbild (N) zusätzlich anzeigbar ist, wobei als Reaktion auf eine Betätigung des Bedienelementes (6) ein Nebenbild (N) erscheint, welches das Fernsehsignal der zuvor im Hauptbild (H) wiedergegebenen Signalquelle darstellt, während im Hauptbild (H) das Fernsehsignal einer anderen Signalquelle dargestellt wird, und der Benutzer nun die Möglichkeit hat, die im Hauptbild (H) wiedergegebene Signalquelle zu wechseln und als Reaktion auf eine nochmalige Betätigung des ersten Bedienelementes (6) oder eine Betätigung eines anderen Bedienelementes (5) das Hauptbild (H) wieder zur Darstellung der ursprünglich im Hauptbild (H) wiedergegebenen Signalquelle zurückkehrt, **dadurch gekennzeichnet, dass** eine Steuerschaltung vorgesehen ist, die mit dem Betätigen des ersten Bedienelementes (6) und dem Erscheinen des Nebenbildes (N) auf dem Bildschirm (1) während einer definierten Zeitdauer auf die Eingabe mindestens eines Steuerbefehls zur Generierung einer Timerfunktion (7) wartet und mit Ablauf der Zeitdauer auf manuellen Bildwechselbetrieb von Neben- zu Hauptbild und durch erneutes Betätigen des ersten Bedienelementes (6) oder des anderen Bedienelementes (5) vom Nebenbild zum Hauptbild wechselt, während bei wiederholter Betätigung des ersten Bedienelementes (6) während der bestimmten Zeitdauer eine Timerfunktion (7) aktiviert wird, die die steuerbare Schaltungsanordnung (2) zum automatischen Umschalten des Nebenbildes (N) zum Erscheinen als Hauptbild (H) mit Ablauf einer bestimmten Zeitvorgabe veranlasst.

2. Fernsehempfangsgerät nach Anspruch 1, **dadurch gekennzeichnet, dass** eine OSD-Schaltung vorgesehen ist, die mindestens die Timerfunktion (7) als Einstell- und/oder Auswahlmenü und/oder eine steuerbare wahlfreie Einstellung (8) von Umschaltzeitpunkten durch Zeiteingaben oder eine Zeitvorgabenauswahl mittels Bedienelementen auf dem Bildschirm anzeigt, welches Einstell- und/oder Auswahlmenü durch Cursorauswahl bedienbar ist, wobei die Zeiteingabe oder Zeitvorgabeauswahl erst nach erneuter Betätigung des ersten Bedienelementes (6) innerhalb der bestimmten Zeitdauer aktiviert ist.

3. Fernsehempfangsgerät nach Anspruch 2, **dadurch gekennzeichnet, dass** die Timerfunktion (7) unterhalb, oberhalb und/oder neben dem verkleinerten Nebenbild (PIP- Bild) oder an anderer Stelle des Bildschirms blockweise dargestellt ist.

4. Fernsehempfangsgerät nach Anspruch 2 oder 3, **dadurch gekennzeichnet, dass** die Darstellung mindestens zweier dargestellter Blöcke der Timerfunktion (7) in einer Zeile oder Spalte erfolgt, in denen verschiedene Betriebslaufzeiten angezeigt sind, und dass die einzelnen Blöcke mittels einer Cursorfunktion auswählbar sind.

5. Fernsehempfangsgerät nach einem der vorhergehenden Ansprüche, **dadurch gekennzeichnet, dass** die Wartefunktion ebenfalls angezeigt wird.

6. Fernsehempfangsgerät nach einem der Ansprüche 3 bis 5, **dadurch gekennzeichnet, dass** die Anzeige nach einer definierten Zeit, vorzugsweise mit Ablauf der Wartezeitdauer, ausgeblendet wird.

7. Fernsehempfangsgerät nach Anspruch 1, 2 oder 3, **dadurch gekennzeichnet, dass** eine Menüdarstellung vorgesehen ist, die den Benutzer zur Eingabe einer Zeitangabe auffordert, dass die Orts- oder Fernbedienungseinrichtung (3) Tasten oder andere Bedienorgane zur Eingabe der Zeit aufweist, und dass die Timerschaltung (8) die steuerbare Schaltungsanordnung (2) veranlasst, mit Ablauf der vorgegebenen Zeit die Rückumschaltung des Nebenbildes zum Hauptbild auszulösen.

8. Fernsehempfangsgerät nach einem der vorhergehenden Ansprüche, **dadurch gekennzeichnet, dass** die Anzeige der Timerfunktion (7) nach Eingabe oder Auswahl der Zeitangabe automatisch erlischt.

9. Fernsehempfangsgerät nach einem der vorhergehenden Ansprüche, **dadurch gekennzeichnet, dass** innerhalb des jeweils aktivierten Zeitabschnittes eine manuell ausgelöste Umschaltfunktion vom Neben- zum Hauptbild die Timerfunktion (7) durch Eingabe eines Steuerbefehls deaktiviert.

10. Fernsehempfangsgerät nach einem der vorhergehenden Ansprüche, **dadurch gekennzeichnet, dass** ein einziges Bedienungselement für die Erstumschaltung, die Aktivierung der Wartezeitdauer, die Aktivierung der Timerfunktion und die Auswahlsteuerung der Blöcke der Timerfunktion vorgesehen ist, wobei die Steuerschaltung in Abhängigkeit der empfangenen Folgesignale die entsprechenden Steuerungen auslöst.

11. Fernsehempfangsgerät nach Anspruch 10, **dadurch gekennzeichnet, dass** bei Betätigung des einzigen Bedienelementes während einer längeren bestimmten Zeitdauer in jedem Timerauswahlmenüblock eine automatische Deaktivierung der Timerschaltung (8) und eine Rückumschaltung von Nebenbild- zu Hauptbilddarstellung erfolgen.
